# EUROPÄISCHE PATENTANMELDUNG

(11) **EP 2 783 655 A1**
(43) Veröffentlichungstag der Anmeldung: **01.10.2014**
(21) Anmeldenummer: 13160794.7
(22) Anmeldetag: 25.03.2013
(51) Int. Cl.: A61C 7/14

(54) **Vorrichtung und Verfahren zum Positionieren von Brackets**

(71) Anmelder: Image Instruments GmbH, 09125 Chemnitz (DE)
(72) Erfinder: Kühnert, Rolf, 09123 Chemnitz (DE)
(74) Vertreter: Raffay & Fleck

(57) **Zusammenfassung**

Splint zum Aufbringen von Brackets auf Zahnflächen, wobei der Splint in Zusammenwirken mit mindestens einem mit diesem Splint verbindbaren und wiederum mit dem Bracket verbindbarem Setzwerkzeug geeignet ist, das Bracket in einer relativ zu den Zähnen vorgegebenen Position und Ausrichtung zu halten, wobei der Splint derart geformt ist, dass die vordefinierte Lage definiert wird durch mindestens drei Kontaktpunkte und/oder -flächen des Splints pro Kiefer zum Zusammenwirken mit okklusalen und/oder inzisalen Punkten und/oder Flächen der Zähne des Kiefers, von denen mindestens zwei pro Kiefer als Kontaktflächen zum formschlüssigen Zusammenwirken mit okklusalen und/oder inzisalen Flächen der Zähne des Kiefers ausgebildet sind, wobei der Splint mindestens eine Aussparung aufweist und der Splint mit seiner Aussparung so ausgebildet ist, dass die Aussparung das Setzwerkzeug teilweise aufnehmen kann.

## Beschreibung

Die vorliegende Erfindung betrifft eine Vorrichtung und ein Verfahren zum Positionieren von Brackets auf Zahnkronen oder Modellen.

Brackets werden verwendet, um Zahnstellungen zu korrigieren. Um sie zu platzieren, sind verschiedentlich Hilfsmittel im Stand der Technik bekannt. So beschreibt beispielsweise die DE 33 18 825 C2 ein entsprechendes Hilfsmittel, um Brackets platzgenau auf Zahnkronen zu platzieren. Ein ähnliches, jedoch deutlich aufwendigeres Verfahren bzw. Hilfsmittel beschreibt die US 5,055,038.

Prinzipiell sind solche Hilfsmittel derart ausgestaltet, dass sie sich an die Form einzelner Zähne bzw. eine Vielzahl von Zähnen formschlüssig anschmiegen und so die Platzierung des Brackets erlauben. Prinzipiell können solche Hilfsmittel verwendet werden, um Brackets direkt im Mundraum des Patienten zu platzieren oder aber auch, um Brackets an einem Modell zu platzieren und beispielsweise daran entsprechende Übertragungstrays tiefzuziehen.

Gemein ist solchen Hilfsmitteln jedoch, dass sie entweder für einen speziellen Zahn und ein Bracket geeignet oder vergleichsweise aufwendig sind bzw. viel Platzbedarf aufweisen und somit ein Platzieren schwierig machen, da der Zugang zum Zahn zum Zweck des Bracketklebens erschwert wird.

Aus einem anderen Gebiet der Technik sind darüber hinaus Operationssplinte bekannt, mit deren Hilfe bei Kieferoperationen die einzelnen Bruchstücke eines Kiefers stabilisiert bzw. ausgerichtet werden. Derartige Operationssplinte sind beispielsweise aus der DE 10 2007 059 141 B4 oder der DE 40 18 273 C2 bekannt.

Aufgabe der vorliegenden Erfindung ist es, ein Verfahren sowie ein Hilfsmittel anzugeben, um auf einfache Weise Brackets passgenau platzieren zu können und dabei mit wenigen Referenzpunkten auszukommen und die Möglichkeit zu schaffen, zahlreiche Brackets in einen Kiefer bzw. in Ober- und Unterkiefer schnell platzieren zu können und dabei viel Arbeitsraum zu lassen.

Gelöst wird die Aufgabe durch einen Splint gemäß Anspruch 1, ein Setzmittel gemäß Anspruch 9 sowie ein Verfahren gemäß Anspruch 15. Die abhängigen Unteransprüche 2 bis 8 und 10 bis 14 geben vorteilhafte Ausgestaltungen an.

Der erfindungsgemäße Splint ist geeignet, mit einem Setzwerkzeug zusammenzuwirken. Das Setzwerkzeug ist dabei geeignet, mit einem Bracket verbunden zu werden. In einem Zustand, in dem das Setzwerkzeug mit dem Bracket und dem erfindungsgemäßen Splint verbunden ist, ist diese Kombination geeignet, das Bracket in vordefinierter relativer Lage und Position zu den Zähnen auf einer Zahlfläche zu positionieren. Dabei ist der Splint so geformt, dass er in einer vordefinierten Lage zu den Zähnen eines Unter- und/oder Oberkiefers stabil positionierbar ist. Darüber hinaus ist der Splint so geformt, dass er geeignet ist, das Setzwerkzeug in einer vorgegebenen relativen Position und Ausrichtung zu halten.

Die Lage des Splintes relativ zum Unter- und/oder Oberkiefer ist dabei definiert durch mindestens drei Kontaktpunkte und/oder Kontaktflächen des Splintes pro Kiefer, bezüglich dessen Zahnflächen der Splint zur Platzierung mindestens eines Brackets eingerichtet ist. Dabei sind die Kontaktflächen bzw. Kontaktpunkte zum Zusammenwirken mit okklusalen und/oder inzisalen Punkten und/oder Flächen der Zähne des Kiefers, auf dessen Zahnflächen der Splint zur Platzierung von Brackets eingerichtet ist, eingerichtet.

Dabei sind mindestens zwei der Kontaktpunkte oder -flächen pro Kiefer, auf dessen Zahnflächen der Splint zur Platzierung von Brackets eingerichtet ist, als Kontaktflächen zum formschlüssigen Zusammenwirken mit okklusalen und/oder inzisalen Flächen der Zähne des Kiefers, auf dessen Zahnflächen der Splint zur Platzierung von Brackets eingerichtet ist, ausgebildet. Des Weiteren ist der Splint dadurch gekennzeichnet, dass der Splint mindestens eine Aussparung aufweist und der Splint mit seiner Aussparung so ausgebildet ist, dass die Aussparung das Setzwerkzeug teilweise aufnehmen und im aufgenommenen Zustand die Ausrichtung und Position des Setzwerkzeuges relativ zum Splint durch ein formschlüssiges Zusammenwirken des Splints und der Form des Setzwerkzeuges definiert werden.

Ein solcher Splint kann auf einfache Weise stabil in einer vordefinierten Lage und Ausrichtung zu einem Unterkiefer, einem Oberkiefer oder einem Unter- und einem Oberkiefer platziert werden. Als Unter- bzw. Oberkiefer kommen dabei sowohl reale Kiefer eines Patienten bzw. dessen Zähne in Frage, als auch entsprechende Modelle.

Zusammen mit einem Setzwerkzeug kann dann das Bracket bzw. können dann mehrere Brackets in vordefinierter Lage und Position auf Zahnflächen platziert werden.

Eine vordefinierte Lage und Position bestimmt dabei die Lokalisierung und Ausrichtung des Brackets in allen Raumrichtungen. Hier sind somit sechs Freiheitsgrade zu berücksichtigen.

Als Setzwerkzeug kommen verschiedene Mittel in Frage. Hier können beispielsweise Blechbögen oder aufwendigere Konstruktionen gewählt werden. Sie können auf unterschiedliche Weise mit einem Bracket verbindbar sein, solange die relative Lage und Position vordefinierbar ist. Hier kommen beispielsweise Klemmverbindungen im Bracketschloss oder Ähnliches in Frage. Auch hier müssen entsprechend sechs Freiheitsgrade definiert werden.

Das Setzwerkzeug muss entsprechend starr bzw. stabil gegen Verbiegungen und Verdrehungen ausgebildet sein, damit bei üblicher Krafteinwirkung durch das Greifen und Einbringen sowie Verkleben die relative Position zwischen aufgenommenen Bracket und Zahnfläche, die durch das Setzmittel definiert werden soll, mit ausreichender Genauigkeit, also mit Abweichungen von weniger als 0,3 mm und 1,5°, insbesondere von weniger als 0,1 mm und 0,5°, eingehalten wird.

Aussparungen zum Aufnehmen von Setzwerkzeugen können, um eine vordefinierte Lage und Ausrichtung zwischen Setzwerkzeug und Splint zu erreichen, mit einem vom Kreis abweichenden Querschnitt ausgebildet sein und in Richtung der Einbringung der Aussparung in den Splint einen entsprechenden Anschlag aufweisen. Der Anschlag kann dabei innerhalb der Aussparung oder an deren Grund liegen oder auch durch die Oberfläche des Splintes bzw. den Beginn der Aussparung definiert sein.

Das Vorsehen eines Anschlages außerhalb der Aussparung vereinfacht das Einbringen der Aussparung, da deren Tiefe dann unabhängig von der gewünschten relativen Ausrichtung zwischen Setzwerkzeug und Splint gewählt werden kann. So kann die Aussparung beispielsweise auch durch den Splint hindurchgehen. Solche Aussparungen sind einfacher zu erzeugen.

Zu einer definierten Ausrichtung kann der Querschnitt der Aussparung beispielsweise rechteckig oder quadratisch gewählt werden. Auch andere Querschnittsformen, die vom Kreisrunden abweichen, sind denkbar.

Auch der Splint ist mit entsprechender Berücksichtigung von sechs Freiheitsgraden bezüglich seiner Lage und Position in einem oder zwei Kiefern positionierbar. Dazu weist er entsprechende Kontaktpunkte bzw. Kontaktflächen auf. Diese können durch einfache Ausfräsungen, Abtragung bzw. Ausnehmungen, beispielsweise aus einer Platte oder einem U-förmigen flachen Bogen geschaffen werden.

Dabei ist zu berücksichtigen, dass eine Mindestanzahl an Kontaktpunkten bzw. Flächen zu gewährleisten ist, damit die Lage und Position des Splintes relativ zu den Zähnen bzw. den Kiefern definiert sind. Zu unterscheiden ist dabei, ob Brackets ausschließlich auf Zähnen eines Kiefers oder Zähnen eines Ober- und eines Unterkiefers platziert werden sollen. Entsprechend ist die Anzahl der Kontaktpunkte oder -flächen zu wählen. Dies rührt daher, dass Unter- und Oberkiefer gegeneinander - in Grenzen - frei beweglich sind.

Damit die Lage des Splintes relativ zum Kiefer bzw. den Zähnen auch bei Bewegungen des Kiefers bzw. Kiefermodells oder bei Ausübung von Kräften, beispielsweise beim Platzieren der Brackets, gesichert ist, ist eine Andruckkraft vorteilhaft bzw. erforderlich. Eine solche Andruckkraft kann durch entsprechende Klemmelemente, Federelemente oder einfach durch einen entsprechenden Aufbiss gewährleistet werden. Dazu bedarf es nicht unbedingt der Vorsehung von Mitteln am Splint. Eine einfache unbearbeitete Oberfläche des Splintes ist vollkommen ausreichend, um beispielsweise durch einen Aufbiss einen entsprechenden Anpressdruck zu realisieren. Es ist jedoch auch möglich, am Splint, insbesondere wenn er an einem Modell eines Kiefers verwendet werden soll, entsprechende Mittel vorzusehen, um einen entsprechenden Anpressdruck zu realisieren.

Vorteilhafterweise werden die Kontaktflächen gemäß Anspruch 2 durch Vertiefungen im Splint gebildet. Dabei ist der Splint vorteilhafterweise ansonsten zum Unter- und/oder Oberkiefer hin so ausgebildet, dass er, sofern er nicht in Bezug auf seine Dicke an die Erstreckung der okklusalen Flächen in Richtung des Splints angepasst ist, eine ebene Fläche aufweist. In einer solchen Form ist der Splint auf besonders einfache und praktische Weise zu erzeugen und besonders praktikabel einsetzbar. Aus entsprechenden Rohlingen, die insbesondere U-förmig, vorteilhafterweise mit Abweichungen von der U-förmigen Ausbildung angepasst an den Kiefer oder das Modell, ausgebildet sind, um den Verlauf der Zähne im Kiefer wiederzuspiegeln und Freiraum, beispielsweise zum Atmen oder für die Zunge, zu lassen, können auf einfache Weise entsprechende Vertiefungen passgenau zu den okklusalen oder inzisalen Flächen bzw. Punkten der Zähne des Kiefers geschaffen werden. Auch spezifische Abweichungen von einer U-förmigen Ausbildung lassen sich so einbringen oder anpassen. Dies kann auf verschiedene Art und Weise geschehen, beispielsweise durch Fräsen oder Laserablation. Auch ist ein Fertigen des Splintes mit gleichen Eigenschaften bezüglich seiner Form von Grund auf, beispielsweise durch Rapid Prototyping, direkt mit entsprechenden Vertiefungen möglich.

Mit Vorteil erstrecken sich die Vertiefungen gemäß Anspruch 3 maximal 2 mm in den Splint hinein. Sie erstrecken sich also vorteilhafterweise von der ansonsten ebenen Oberfläche maximal 2 mm in den Splint hinein. Dies ermöglicht einen besonders großen Freiraum an den Zahnflächen und so eine besonders geringe Behinderung bei der Verwendung des Splintes.

Mit besonderem Vorteil sind gemäß Anspruch 4 zwei oder drei Kontaktflächen und insbesondere genau ein Kontaktpunkt pro Kiefer, in dem Brackets platziert werden sollen, vorgesehen. Ein solches Vorsehen reicht aus, um die Lage ausreichend genau zu definieren und ermöglicht eine besonders einfache Fertigung und verhindert eine zu große Überbestimmung der Position, welche zu Problemen beim Einsatz führen kann.

Mit besonderem Vorteil sind die zwei oder drei Kontaktflächen solche zum Zusammenwirken mit okklusalen Flächen der Zähne und ist der Kontaktpunkt insbesondere ein solcher zum Zusammenwirken mit inzisalen Punkten.

Als Kontaktpunkt ist hier kein Punkt im strengen mathematischen Sinne zu sehen. Ein Punkt weist jedoch eine verhältnismäßig geringe Erstreckung auf und definiert die Lage nur in Richtung eines Freiheitsgrades.

Vorteilhafterweise ist im Splint gemäß Anspruch 5 eine Aussparung pro zu platzierendem Bracket beinhaltet. In diese Aussparungen kann das Setzwerkzeug eingebracht werden. Bei einem Vorsehen von einer Aussparung pro zu platzierendem Bracket kann das Setzwerkzeug einfach bei jeder Platzierung eines Brackets in eine weitere Aussparung eingebracht werden. Dies ermöglicht eine Herstellung mit vergleichsweise geringem Aufwand und eine sichere Verwendung. Dabei sind die Aussparungen vorteilhafterweise in der Nähe bzw. im Bereich des Zahnes angeordnet, auf dem das Bracket platziert werden soll, wenn diese Aussparung verwendet wird. Somit ist eine Aussparung zur Platzierung eines Brackets auf einer Zahnfläche insbesondere in unmittelbarer Nähe zum entsprechenden Zahn angeordnet, jeweils gesehen in der Position, in der der Splint in der vordefinierten Position und Lage am Kiefer anliegt. Insbesondere sind die Aussparungen an einer Stirnfläche eines Splintes angeordnet. Die Stirnfläche erstreckt sich dabei vorteilhafterweise und, insbesondere wenn an ihr oder im Zusammenspiel mit ihr mindestens ein Anschlag vorgesehen ist, senkrecht zu zur Längserstreckung der Aussparungen im Splint. Die Stirnfläche erstreckt sich des Weiteren bei horizontal ausgerichtetem Kiefer und darauf aufgesetztem Splint ist in der horizontalen Erstreckung insbesondere U-förmig. Bezüglich der U-förmigen Ausbildung sind an den jeweiligen Kiefer oder das entsprechende Modell angepasste Abweichungen vorteilhaft.

Auf einer solchen Stirnfläche sind die Aussparungen insbesondere bei horizontaler Kiefererstreckung vertikaler über den Zähnen angeordnet, auf denen bei der Verwendung der jeweiligen Aussparung ein Bracket zu platzieren ist. Bei Verwendung des Splintes für einen Unter- und Oberkiefer sind die Aussparungen vorteilhafterweise übereinander, ggf. mit seitlichem Versatz und ggf. mit Überschneidungen der vertikalen Erstreckung vorgesehen.

Mit besonderem Vorteil ist der Splint im Wesentlichen flach, d.h. also bei Platzierung auf einem horizontalen Kiefer in vertikaler Erstreckung eben und insbesondere in der Aufsicht U-förmig bzw. hufeisenförmig ausgebildet. Durch eine flache Ausbildung kann der Splint besonders einfach und Material sparend hergestellt werden. Die U-förmige Ausbildung mit innerer Ausnehmung sorgt ebenfalls für geringen Materialverbrauch und einen guten Zugang auch zu lingualen Flächen der Zahnkronen sowie für Freiraum zum Atmen und für die Zunge.

Mit Vorteil ist der Splint gemäß Anspruch 7 so ausgebildet, dass die vordefinierte stabile Lage durch das Zusammenwirken mit zwei Höckern molarer Okklusionsflächen bewirkt wird. In diesem Zusammenwirken mit zwei Höckern ist das Zusammenwirken durch zwei Kontaktflächen zu sehen. Zusätzlich wird zumindest ein weiterer Kontaktpunkt benötigt, um den Splint bezüglich eines Kiefers in einer vordefinierten Lage und Ausrichtung sicher zu platzieren.

Insbesondere ist es bevorzugt, die Kontaktflächen so auszubilden, dass sie mit jeweils einem Höcker molarer Okklusionsflächen zusammenwirken.

Zwar ist es meistens notwendig, die Vertiefungen großflächiger einzubringen, als dies zum Zusammenwirken mit zwei Höckern molarer Okklusionsflächen notwendig wäre, doch ist die Vertiefung, die über die Kontaktfläche zum Kontakt mit molaren Okklusionsflächenhöckern hinaus vorgesehen ist, auch ungenau durchzuführen, so dass hier schnell und grob gearbeitet werden, während bezüglich der Kontaktflächen zum Zusammenwirken mit den Höckern der molaren Okklusionsflächen genauer zu arbeiten ist, um eine entsprechende Genauigkeit der Platzierung zu erzielen. Die großflächigere Vertiefung ist aber bei Ausbildung eines flachen Splintes häufig notwendig, um den Höcker ausreichend aufnehmen zu können. Die hängt insbesondere davon ab, wie die Höhe der einzelnen Höcker bzw. die Höhe der Zahnkronen im jeweiligen Kiefer verteilt ist.

Mit besonderem Vorteil ist die mindestens eine Aussparung im Splint gemäß Anspruch 8 derart geformt, dass mit einem einzigen Setzwerkzeug oder mehreren identischen Setzwerkzeugen alle vordefinierten Positionen und Ausrichtungen der zu setzenden Brackets durch Einbringen in die mindestens eine Aussparung erreicht werden kann. Dies trifft auch dann zu, wenn Ober- und Unterkiefer mit einem Splint bedient werden sollen.

Dadurch kann mit einem einzigen Setzwerkzeug gearbeitet werden, auch wenn unterschiedliche Positionen für die Bracket vordefiniert sind. Dies erleichtert das Arbeiten und reduziert den vorzuhaltenden Materialaufwand.

Unterschiedliche Positionen können insbesondere dadurch erreicht werden, dass die Aussparungen an sich zwar identisch sind, jedoch in ihren Orientierungen und Lagen zur jeweiligen Zahnfläche unterschiedlich im Splint eingebracht sind. Dabei wird die Orientierung und Lage durch die für das zu setzende Bracket vorgesehene Lage und Ausrichtung sowie die Form des Setzwerkzeuges bestimmt.

Gelöst wird die Aufgabe auch durch ein Setzmittel zum Aufbringen mindestens eines Brackets auf Zahnflächen von Zähnen eines Unter- und/oder Oberkiefers oder eines entsprechenden Abbildes. Das Setzmittel beinhaltet einen Splint, wie oben stehend beschrieben. Darüber hinaus beinhaltet das Setzmittel mindestens ein mit dem Splint verbindbares und wiederum mit einem Bracket in vordefinierter relativer Lage und Position verbindbares Setzwerkzeug. Es können auch mehrere, vorzugsweise identische, Setzwerkzeuge beinhaltet sein.

Dabei kann das Bracket durch Verwendung des Setzmittels im mit dem Setzmittel verbundenen Zustand in einer durch das Setzmittel relativ zur Zahnfläche vorgegebenen Position und Ausrichtung gehalten werden.

Das mindestens eine Setzwerkzeug ist wie oben beschrieben mit dem Splint verbindbar, also in mindestens einer Aussparung des Splints einbringbar, so dass die Lage und Ausrichtung des Setzwerkzeuges relativ zum Splint definiert ist.

Das Setzwerkzeug weist dazu insbesondere einen splintseitigen Abschnitt auf, der in eine Aussparung des Splintes eingebracht werden kann. Dieser Abschnitt kann beispielsweise direkt an einen Anschlag des Setzwerkzeuges angrenzen, so dass der Anschlag des Setzwerkzeuges beim Einbringen des splintseitigen Abschnittes des Setzwerkzeuges in dem Splint an der Oberfläche des Splintes anschlägt, und somit die Einbringtiefe des Setzwerkzeuges in den Splint definiert.

Darüber hinaus weist das Setzmittel insbesondere einen bracketseitigen Abschnitt auf, der so ausgebildet ist, dass er mit einem Bracket so verbindbar ist, dass das Bracket in einer vordefinierten relativen Lage und Position mit dem Setzwerkzeug verbunden ist. Hier sind verschiedene Ausführungen denkbar. Insbesondere kann das Setzmittel am bracketseitigen Abschnitt ein Mittel aufweisen, um in einem Slot des Brackets einzugreifen. Auch können verschiedene Abschnitte und Mittel am bracketseitigen Abschnitt des Setzwerkzeuges vorgesehne sein, um die Lage und Position in Zusammenspiel zu definieren. So kann beispielsweise neben einem Eingreifen in den Bracketslot eine beidseitige Begrenzung gegen ein Verrutschen des Brackets in Richtung der Erstreckung des Bracketslots vorgesehen werden.

Das Setzwerkzeug kann vergleichsweise einfach und kostengünstig ausgeführt werden. Insbesondere ist es so ausgeführt, dass es gut zu greifen ist und Arbeitsbereich zum Aufbringen bzw. Befestigen oder Verkleben des Brackets nicht übermäßig einschränkt. So kann das Setzwerkzeug beispielsweise aus einem gebogenen Blech oder einem gebogenen eckigen oder zumindest im Querschnitt nicht kreisrunden Draht bestehen. Das Setzwerkzeug kann dabei insbesondere so gebogen sein, dass es einen U-förmigen Abschnitt aufweist.

Dabei können die Schenkel, die sich an den U-förmigen Abschnitt anschließen unterschiedlich lang ausgebildet sein und insbesondere an ihren vom U-förmigen Abschnitt abgewandten Enden zum einen den splintseitigen Abschnitt zum Einbringen in eine Aussparung und zum anderen den bracketseitigen Abschnitt zum Halten eines Brackets aufweisen.

Darüber hinaus kann beispielsweise ein Griffabschnitt, insbesondere im Bereich des U-förmigen Abschnittes vorgesehen oder befestigt sein.

So kann dann das Setzwerkzeug einfach gegriffen werden und mit einem daran befestigten Bracket in die Aussparung des Splintes eingebracht und durch leichtes Eindrücken des Setzwerkzeuges gegen einen Anschlag bzw. in die Aussparung in eine definierte Lage gebracht und dort zuverlässig gehalten werden, während das Bracket mit der Zahnfläche bzw. einer entsprechenden Fläche eines entsprechenden Abbildes verbunden wird.

Mit besonderem Vorteil ist das Setzwerkzeug gemäß Anspruch 10 so ausgebildet, dass es in seiner Breite die Breite zu setzenden Brackets nicht mehr als 4 mm, insbesondere nicht mehr als 2 mm, überschreitet, insbesondere nicht breiter als 7 mm ist. Dabei kann der Griffabschnitt breiter ausgebildet sein. Vorteilhafterweise ist aber auch dieser in seiner Breite entsprechend beschränkt. Dadurch verbleibt ausreichend Arbeitsraum, um zügig und genau arbeiten zu können.

Mit der Breite ist dabei die Erstreckung in vertikaler Richtung bei vertikaler Lage des Kiefers gemeint.

Die Breite erstreckt sich somit im Wesentlichen parallel zur Kauffläche und parallel zur inneren oder äußeren Zahnseitenfläche.

Mit besonderem Vorteil weist das Setzmittel gemäß Anspruch 11 eine Höhe von weniger als 15 mm, insbesondere weniger als 10 mm auf. Mit Höhe ist dabei die Erstreckung senkrecht zu den Kauflächen zu verstehen.

Insbesondere erstreckt sich das Setzwerkzeug lediglich in der Höhe so weit, dass es sich bei aufgenommenen Bracket und eingesetzt in den Splint nicht über die vom Splint abgewandte Seite des Brackets erstreckt und sich insbesondere nicht über die vom Bracket abgewandte Erstreckung der entsprechenden Aussparung erstreckt.

Auch dadurch kann entsprechend Arbeitsraum geschaffen werden und das Setzwerkzeug bei ausreichender Funktion mit vergleichsweise wenig Materialeinsatz hergestellt werden.

Mit besonderem Vorteil weist das Setzwerkzeug einen Griffabschnitt zum Ergreifen und Halten sowie Einsetzen in die Aussparung im Splint und Andrücken gegen einen entsprechenden Anschlag auf.

Der Griffabschnitt kann dabei durch einen entsprechend großen Blechabschnitt gebildet werden.

Mit besonderem Vorteil ist der Griffabschnitt so geformt, dass er bei horizontaler Kieferausrichtung und aufgebrachtem Splint sowie darin eingebrachtem Setzwerkzeug von oben und unten mit jeweils einem Finger durch Zusammendrücken der Finger mit dazwischen liegendem Griffabschnitt gegriffen werden kann.

Mit besonderem Vorteil ist das Setzmittel gemäß Anspruch 13 ein starres gebogenes Blech oder beinhaltet ein solches. Mit besonderem Vorteil ist das Setzmittel gemäß Anspruch 14 aus einem starren Blech, aufweisend einen geraden und einen daran anschließenden gebogenen Abschnitt, sowie insbesondere einen daran anschließenden weiteren geraden Abschnitt, sowie optional einen Griff bzw. Griffabschnitt gebildet.

Gelöst wird die Aufgabe auch durch ein Verfahren zum Aufbringen mindestens eines Brackets auf Zahnflächen von Zähnen eines Unter- und/oder Oberkiefers oder eines entsprechenden Abbildes, wobei auf einer Basisfläche des Brackets und/oder auf der Zahnfläche Verbindungsmittel vorgesehen wird und das Bracket durch Verwendung eines mit dem Bracket in vordefinierter relativer Lage und Position verbindbaren Setzmittels in verbundenem Zustand in einer durch das Setzmittel relativ zur Zahnfläche vorgegebenen Position und Ausrichtung gehalten wird. Dabei wird das Verbindungsmittel, während das Bracket durch das Setzmittel in der vorgegebenen Position und Ausrichtung gehalten wird, zumindest teilweise aushärtet. Dabei weist das Setzmittel zumindest ein mit diesem Splint verbindbares und wiederum mit dem Bracket verbindbares Setzwerkzeug auf. Erfindungsgemäß wird der Splint in einer vordefinierten Lage zum Ober - und/oder Unterkiefer stabil positioniert. Das Verfahren ist des Weiteren dadurch gekennzeichnet, dass die vordefinierte Lage definiert wird durch mindestens drei okklusale und/oder inzisale Kontaktpunkte und/oder -flächen zwischen Splint und Zähnen pro Kiefer, auf dessen Zahnflächen die Brackets aufgebracht werden.

Von diesen Kontaktpunkten und/oder -flächen sind mindestens zwei pro Kiefer, auf dessen Zahnflächen Brackets aufgebracht werden, Kontaktflächen mit formschlüssigem Kontakt mit okklusalen und/oder inzisalen Flächen der Zähne des Kiefers, auf dessen Zahnflächen Brackets aufgebracht werden. Das mindestens eine Setzwerkzeug wird dabei teilweise so in eine Aussparung im Splint eingebracht, dass seine Ausrichtung und Position relativ zum Splint durch ein formschlüssiges Zusammenwirken des Splintes und der Form des Setzwerkzeuges definiert werden.

Vorteilhafterweise wird das Setzwerkzeug dabei gegen einen Anschlag am Splint bzw. in der Aussparung gedrückt.

Als Verbindungsmittel können beispielsweise Kleber oder Wachs verwendet werden. Die Aushärtung kann durch unterschiedliche Verfahrensweisen, die vom verwendeten Verbindungsmittel abhängen können, realisiert werden. Hier kommt beispielsweise eine Aushärtung durch Trocknen oder durch Kontakt mit der Umgebungsluft oder durch Wärme und/oder UV- und/oder IR-Strahlung in Frage. Vorteilhafterweise wird dabei ein Verbindungsmittel eingesetzt, das durch entsprechende Strahlungseinwirkung aushärtet und wird, während das Bracket entsprechend durch das Setzmittel gehalten wird, die entsprechende Strahlung auf das Verbindungsmittel gerichtet. Mitunter können hier vergleichsweise kurze Zeiten ausreichen.

Entscheidend ist jedoch, dass das Bracket ausreichend lange gehalten wird, um ein derartiges Aushärten des Verbindungsmittels zu realisieren, das ein Verrutschen bzw. Verkanten des Brackets weitestgehend verhindert. Es ist jedoch nicht notwendig, dass das Verbindungsmittel vollständig ausgehärtet ist.

Vorteilhafterweise wird beim Setzen mehrerer Brackets ein einziges Setzwerkzeug bzw. werden beim Setzen mehrerer Brackets mehrere identische Setzwerkzeuge verwendet. Beim Verwenden eines einzigen Setzwerkzeuges wird vorteilhafterweise zunächst das Setzwerkzeug mit einem Bracket verbunden und sodann das Setzwerkzeug in den Splint eingebracht. Dies wiederholt sich dann gegebenenfalls nach dem zumindest teilweisen Aushärten mit einem weiteren Bracket und einer weiteren Aussparung. Beim Verwenden mehrerer Setzwerkzeuge werden vorteilhafterweise die Setzwerkzeuge vor dem Einbringen des Splintes ebenfalls jeweils mit einem Bracket verbunden. Vorteilhafterweise werden zunächst alle zu verwendenden Setzwerkzeuge mit jeweils einem Bracket verbunden und sodann anschließend nacheinander in die Aussparungen des Splintes eingebracht.

Vorteilhafterweise wird vor dem Verbinden der Brackets mit den Zahnflächen und insbesondere auch vor dem Einbringen von Setzwerkzeugen in den Splint der Splint durch Aufbringen einer Kraft senkrecht zu den Kauflächen gegen Verrutschen bzw. Abrutschen von den Kontaktflächen bzw. Kontaktpunkten gesichert. Solche Kraft kann beispielsweise durch einen entsprechenden Aufbiss auf den Splint oder durch andere Mittel, wie beispielsweise Anpressen durch Handkraft oder entsprechende Klemmen oder Spannmittel realisiert werden.

Mit Vorteil kann das Setzmittel gemäß den bzw. einem der zuvor beschriebenen vorteilhaften Ausbildungen ausgebildet sein.

Mit Vorteil wird zuvor zunächst eine entsprechende Information über einen realen Kiefer mit darin enthaltenen Zahnflächen gewonnen und anhand dieser Information ein entsprechender Splint geplant und produziert. Der Produktion des Splintes und auch der Planung des Splintes vorgelagert kann ein entsprechendes Setup, virtuell oder real, der Zähne im Kiefer sein. Dabei können die optimalen Positionen der Brackets auf den Zahnflächen bestimmt werden und basierend auf dieser Information und der Information über das aktuelle Gebiss selbst der Splint so geplant werden, dass die Brackets durch Verwendung des Splintes und mindestens eines Setzwerkzeuges auf die zuvor bestimmten Positionen und in den bestimmten Ausrichtungen aufgebracht werden können.

Dies kann auch für Ober- und Unterkiefer gleichzeitig mit einem oder zwei Splinten realisiert werden.

Vorteilhafterweise wird, wenn die Brackets auf einem entsprechenden realen Modell durch Verwendung des Setzmittels aufgebracht werden, im Anschluss ein entsprechendes Abbild der Zähne oder einiger Zähne eines Kiefers zusammen mit den aufgebrachten Brackets genommen und insbesondere verwendet, um Brackets auf realen Zahnflächen aufzusetzen.

Durch ein solches Verfahren kann auf einfache Weise ein reales Modell mit optimal platzierten Brackets geschaffen werden und daran eine Vorrichtung erstellt werden, mit dem die Position der Brackets einfach schnell und zuverlässig auf reale Zahnflächen übertragen werden kann.

Hier bietet sich beispielsweise das Tiefziehen einer entsprechenden Tiefziehfolie über das Modell mit den aufgebrachten Brackets an. Aber auch ein Abguss oder Ähnliches ist denkbar.

Insbesondere können bei einem solchen Verfahren bei Verwendung identischer Setzwerkzeuge die Setzwerkzeuge bzw. das Setzwerkzeug wiederverwendet werden. So muss lediglich der Splint angepasst auf die jeweilige Situation des realen Gebisses hergestellt werden. Er kann aus günstigem und recycelbarem Material hergestellt werden, so dass durch die Erfindung ein einfaches und besonders vorteilhaftes Verfahren auch zur Erzeugung entsprechender Übertragungsvorrichtungen angegeben ist.

Weitere vorteilhafte Ausbildungen und Vorteile der Erfindung sollen rein exemplarisch und nicht beschränkend an den folgenden rein schematischen Zeichnungen erläutert werden. Dabei zeigen:
- Fig. 1: eine seitliche Ansicht eines Splintes zwischen einem Ober- und Unterkiefer mit Setzwerkzeug und Bracket;
- Fig. 2: eine alternative Anordnung zu Fig. 1;
- Fig. 3: einen Querschnitt durch eine Aussparung in einem erfindungsgemäßen Splint;
- Fig. 4: eine Detailansicht einer möglichen Aufnahme eines Brackets an einem Setzwerkzeug und
- Fig. 5: eine um 90° gedrehte Detailansicht der Anordnung aus Fig. 4.

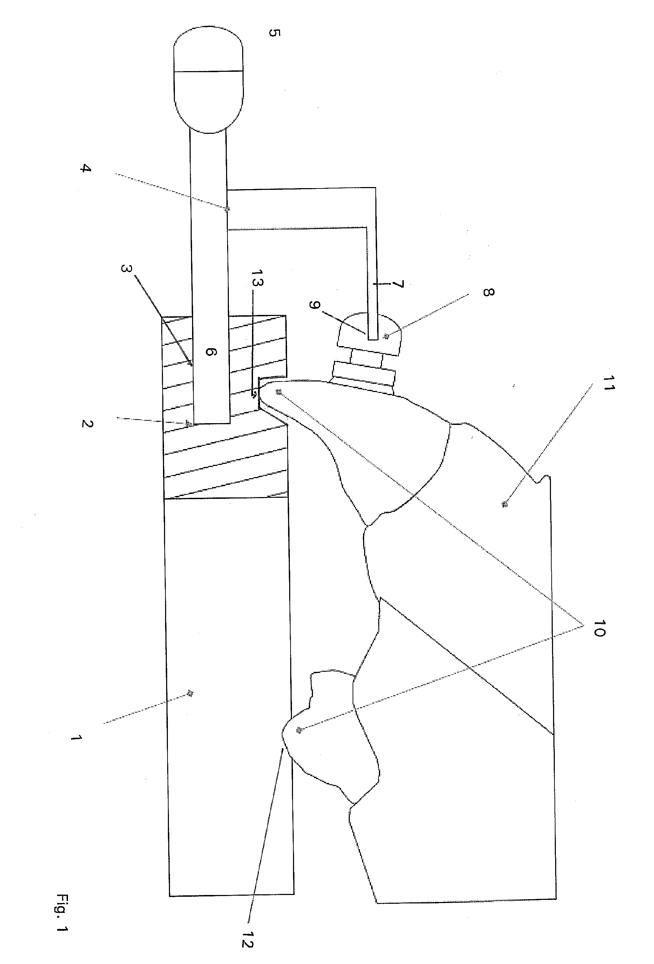

Fig. 1 zeigt eine seitliche Ansicht eines Splintes 1 aufgenommen an einem Oberkiefer 11. Der Splint weist eine Aussparung 3 mit bodenseitigem Anschlag 2 auf. In die Aussparung 3 ist bis zum Anschlag 2 ein Setzwerkzeug 4 mit seinem bracketseitigem Ende 6 eingebracht. Das Setzwerkzeug 4 weist einen U-förmigen Abschnitt auf, an dem ein Griff 5 angebracht ist. Das Setzwerkzeug 4 weist darüber ein bracketseitiges Ende 7 auf, an dem über ein Bracketslot 9 ein Bracket 8 aufgenommen ist. Darüber hinaus ist ein okklusaler formschlüssiger Flächenkontakt 12 zwischen Splint 1 und einer Zahnkrone 10 gezeigt. Auch ein inzisaler Punktkontakt 13 zwischen Splint 1 und einer Zahnkrone 10 ist zu erkennen.

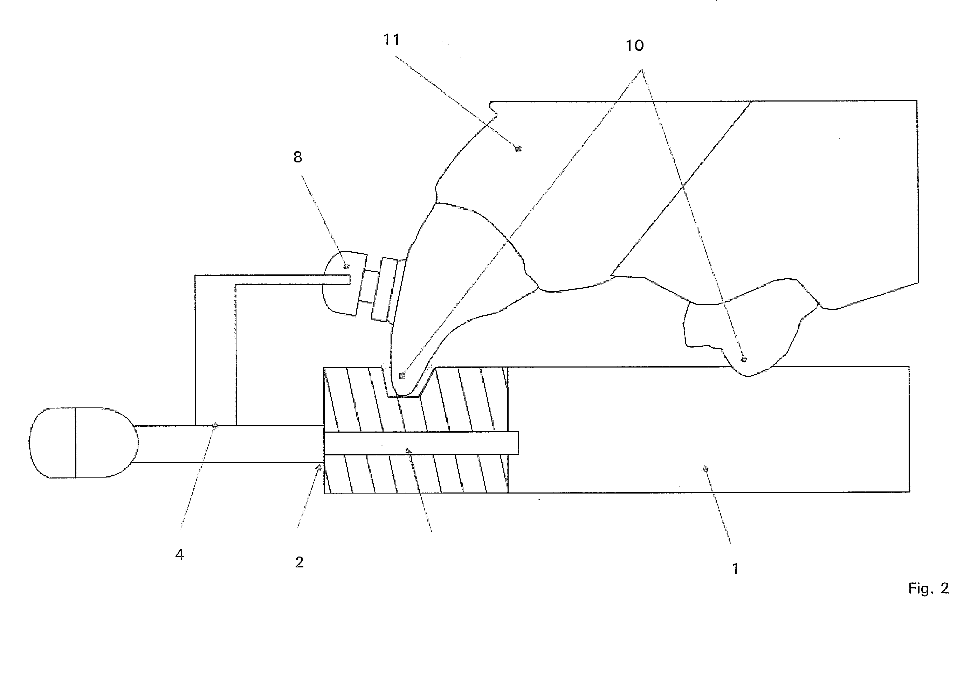

Fig. 2 zeigt eine Anordnung wie in Fig. 1, jedoch mit einem Anschlag 2 des Splintes 1 an einer äußeren Stirnfläche des Splintes und am Beginn der Aussparung 3.

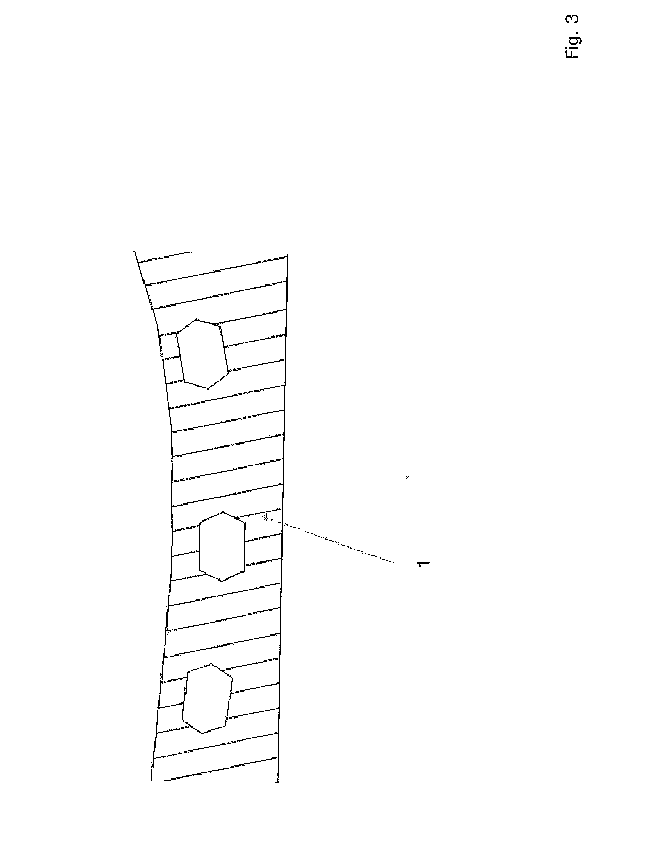

Fig. 3 zeigt einen Querschnitt durch eine Aussparung 3 eines Splintes 1. Zu erkennen ist, dass die Aussparung im Querschnitt vom Kreisrunden abweicht und so fünf Freiheitsgrade der Lage und Position des Setzwerkzeuges relativ zum Splint 1 definiert. Der übrige sechste Freiheitsgrad kann dann, wie in den vorangegangenen Figuren 1 und 2 gezeigt, durch einen entsprechenden Anschlag definiert werden.

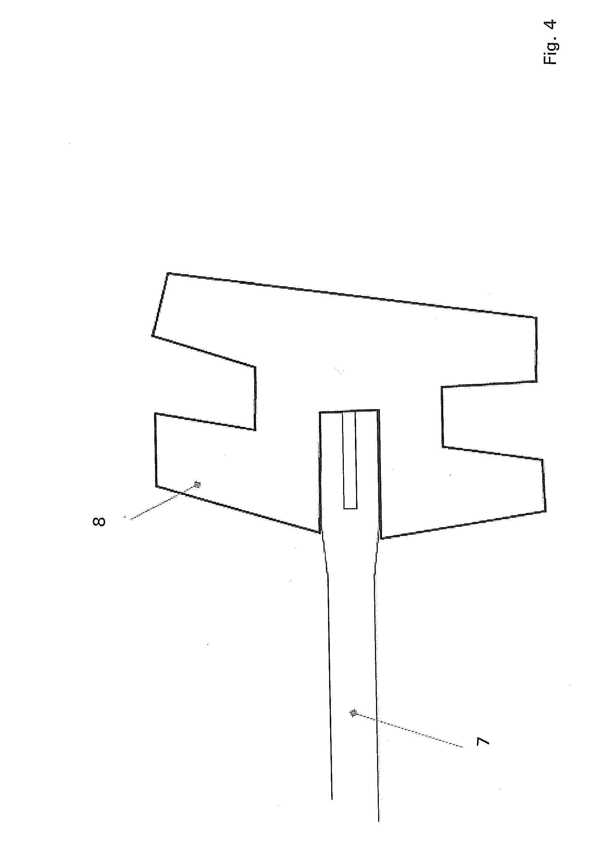

Fig. 4 zeigt die Aufnahme eines Brackets 8 am bracketseitigem Ende 7 eines Setzwerkzeuges 4. Zu erkennen ist, wie das Setzwerkzeug 4 mit seinem bracketseitigem Ende 7 zum einen in den Bracketslot 9 eingreift.

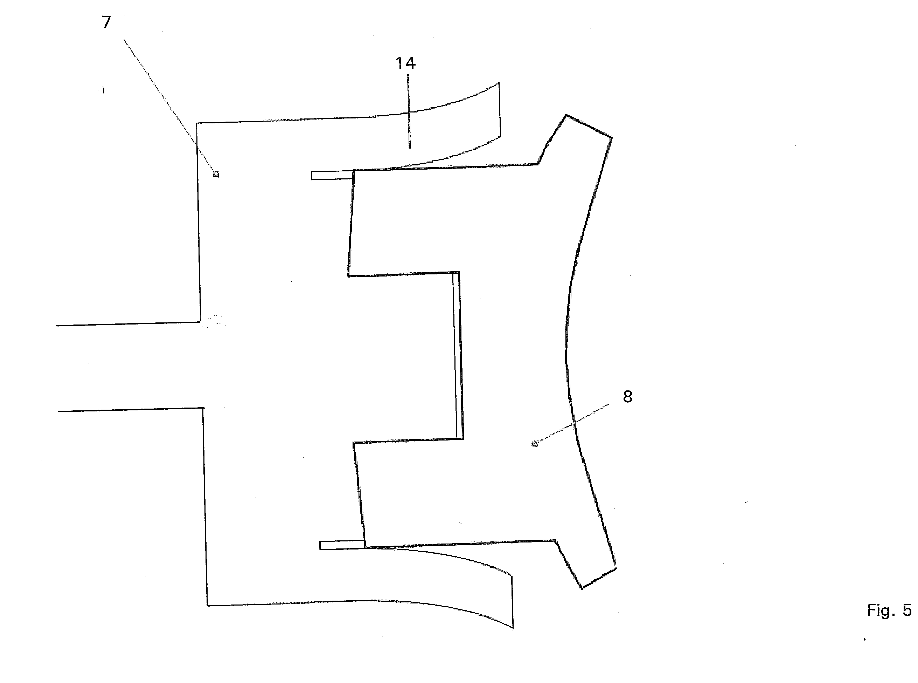

Fig. 5 zeigt eine um 90° gedrehte Detailansicht der Anordnung aus Fig. 4. Zu erkennen sind am bracketseitigem Ende 7 des Setzwerkzeuges 4 seitliche Begrenzungen 14, die das Bracket 8 seitlich fassen.

**Bezugszeichenliste**

| | |
|---|---|
| 1 | Splint |
| 2 | Anschlag |
| 3 | Aussparung |
| 4 | Setzwerkzeug |
| 5 | Griff |
| 6 | splintseitiges Ende |
| 7 | bracketseitiges Ende |
| 8 | Bracket |
| 9 | Bracketslot |
| 10 | Zahnkrone |
| 11 | Kiefer |
| 12 | okklusaler formschlüssiger Flächenkontakt |
| 13 | inzisaler Punktkontakt |
| 14 | seitliche Begrenzungen |

## Patentansprüche

1. Splint zum Aufbringen mindestens eines Brackets auf Zahnflächen von Zähnen eines Unter- und/oder Oberkiefers oder eines entsprechenden Abbildes,
wobei der Splint in Zusammenwirken mit mindestens einem mit diesem Splint verbindbaren und wiederum mit dem Bracket in vordefinierter relativer Lage und Position verbindbarem Setzwerkzeug geeignet ist, das Bracket in einer relativ zu den Zähnen vorgegebenen Position und Ausrichtung zu halten und
wobei der Splint so geformt ist, dass er in einer vordefinierten Lage zu den Zähnen des Unter- und/oder Oberkiefers stabil positionierbar ist, **dadurch gekennzeichnet,**
**dass** der Splint derart geformt ist, dass die vordefinierte Lage definiert wird durch mindestens drei Kontaktpunkte und/oder -flächen des Splints pro Kiefer, auf dessen Zahnflächen der Splint zur Platzierung von Brackets eingerichtet ist, zum Zusammenwirken mit okklusalen und/oder inzisalen Punkten und/oder Flächen der Zähne des Kiefers, auf dessen Zahnflächen der Splint zur Platzierung von Brackets eingerichtet ist,
von denen mindestens zwei pro Kiefer, auf dessen Zahnflächen der Splint zur Platzierung von Brackets eingerichtet ist, als Kontaktflächen zum formschlüssigen Zusammenwirken mit okklusalen und/oder inzisalen Flächen der Zähne des Kiefers, auf dessen Zahnflächen der Splint zur Platzierung von Brackets eingerichtet ist, ausgebildet sind und **gekennzeichnet dadurch,**
**dass** der Splint mindestens eine Aussparung aufweist und der Splint mit seiner Aussparung so ausgebildet ist, dass die Aussparung das Setzwerkzeug teilweise aufnehmen kann, und im aufgenommenen Zustand die Ausrichtung und Position des Setzwerkzeuges relativ zum Splint durch ein formschlüssiges Zusammenwirken des Splints und der Form des Setzwerkzeuges definiert werden.

2. Splint nach Anspruch 1, **dadurch gekennzeichnet, dass** die Kontaktflächen durch Vertiefungen im Splint gebildet werden und der Splint ansonsten zum Unter- und/oder Oberkiefer hin eine eben Oberfläche aufweist.

3. Splint nach Anspruch 2, **dadurch gekennzeichnet, dass** sich die Vertiefungen maximal 2mm in den Splint erstrecken.

4. Splint nach einem der vorstehenden Ansprüche, **dadurch gekennzeichnet, dass** zwei oder drei Kontaktflächen und insbesondere genau ein Kontaktpunkt vorgesehen sind.

5. Splint nach einem der vorstehenden Ansprüche, **dadurch gekennzeichnet, dass** eine Aussparung pro zu platzierendem Bracket im Splint beinhaltet ist.

6. Splint nach einem der vorstehenden Ansprüche, **dadurch gekennzeichnet, dass** der Splint in seiner Höhe flach und in der Aufsicht insbesondere hufeisenförmig ausgebildet ist.

7. Splint nach einem der vorstehenden Ansprüche, **dadurch gekennzeichnet, dass** Splint so ausgebildet ist, dass die vordefinierte stabile Lage durch das Zusammenwirken mit zwei Höckern der molaren Okklusionsflächen bewirkt wird.

8. Splint nach einem der vorstehenden Ansprüche, **dadurch gekennzeichnet, dass** die mindestens eine Aussparung derart geformt ist, dass mit einem einzigen Setzwerkzeug oder mehreren identischen Setzwerkzeugen alle vordefinierten Positionen und Ausrichtungen der zu setzenden Brackets, insbesondere auf Zahnflächen des Ober- und Unterkiefers, durch Einbringen in die mindestens eine Aussparung erreicht werden können.

9. Setzmittel zum Aufbringen mindestens eines Brackets auf Zahnflächen von Zähnen eines Unter- und/oder Oberkiefers oder eines entsprechenden Abbildes, beinhaltend einen Splint nach einem der vorstehenden Ansprüche, wobei das Bracket durch Verwendung des Setzmittels im mit dem Setzmittel verbundenen Zustand in einer durch das Setzmittel relativ zur Zahnfläche vorgegebenen Position und Ausrichtung gehalten wird und wobei das Setzmittel mindestens ein mit dem Splint verbindbares und wiederum mit dem Bracket in vordefinierter relativer Lage und Position verbindbares Setzwerkzeug aufweist.

10. Setzmittel nach einem der vorstehenden Ansprüche, **dadurch gekennzeichnet, dass** das Setzwerkzeug in seiner Breite die Breite des zu setzenden Brackets nicht um mehr als 4mm, insbesondere nicht mehr als 2 mm, überschreitet, insbesondere nicht breiter als 7 mm ist.

11. Setzmittel nach einem der vorstehenden Ansprüche, **dadurch gekennzeichnet, dass** das Setzwerkzeug eine Höhe von weniger als 15mm, insbesondere weniger als 10mm aufweist.

12. Setzmittel nach einem der vorstehenden Ansprüche, **dadurch gekennzeichnet, dass** das Setzwerkzeug einen Griffabschnitt beinhaltet.

13. Setzmittel nach einem der vorstehenden Ansprüche, **dadurch gekennzeichnet, dass** das Setzwerkzeug ein starres gebogenes Blech ist.

14. Setzmittel nach einem der vorstehenden Ansprüche, **dadurch gekennzeichnet, dass** das Setzwerkzeug aus einem starren Blech, aufweisend einen geraden und einen daran anschließenden gebogenen Abschnitt, sowie optional einen Griff, gebildet ist.

15. Verfahren zum Aufbringen mindestens eines Brackets auf Zahnflächen von Zähnen eines Unter- und/oder Oberkiefers oder eines entsprechenden Abbildes, wobei auf einer Basisfläche des Brackets und/oder auf der Zahnfläche Verbindungsmittel vorgesehen wird und das Bracket durch Verwendung eines mit dem Bracket in vordefinierter relativer Lage und Position verbindbaren Setzmittels im verbundenen Zustand in einer durch das Setzmittel relativ zur Zahnfläche vorgegebenen Position und Ausrichtung gehalten wird und das Verbindungsmittel während das Bracket durch das Setzmittel in der vorgegebenen Position und Ausrichtung gehalten wird zumindest teilweise aushärtet, wobei das Setzmittel ein Splint und mindestens ein mit diesem Splint verbindbares und wiederum mit dem Bracket verbindbares Setzwerkzeug aufweist und wobei der Splint in einer vordefinierten Lage zum Ober- und/oder Unterkiefer stabil positioniert wird, **dadurch gekennzeichnet, dass** die vordefinierte Lage definiert wird durch mindestens drei okklusalen und/oder inzisalen Kontaktpunkte und/oder -flächen zwischen Splint und Zähnen pro Kiefer, auf dessen Zahnflächen Brackets aufgebracht werden,
von denen mindestens zwei pro Kiefer, auf dessen Zahnflächen Brackets aufgebracht werden, Kontaktflächen mit formschlüssigen Kontakt mit okklusalen und/oder inzisalen Flächen der Zähne des Kiefers, auf dessen Zahnflächen Brackets aufgebracht werden, ausgebildet sind und dass das mindestens eine Setzwerkzeug teilweise so in eine Aussparung im Splint eingebracht wird, dass seine Ausrichtung und Position relativ zum Splint durch ein formschlüssiges Zusammenwirken des Splints und der Form des Setzwerkzeuges definiert werden.
